(19) Europäisches Patentamt
European Patent Office
Office européen des brevets

(11) **EP 2 779 563 B1**

## (12) EUROPEAN PATENT SPECIFICATION

(45) Date of publication and mention
of the grant of the patent:
**30.05.2018 Bulletin 2018/22**

(51) Int Cl.:
**H04L 27/38** *(2006.01)*

(21) Application number: **13159316.2**

(22) Date of filing: **15.03.2013**

(54) **Iq error correction**

IQ-Fehlererkennung

Correction d'erreur IQ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.09.2014 Bulletin 2014/38**

(73) Proprietor: **BlackBerry Limited
Waterloo, ON N2K 0A7 (CA)**

(72) Inventor: **Manku, Tajinder
Waterloo, Ontario N3W8 (CA)**

(74) Representative: **Noble, Nicholas et al
Kilburn & Strode LLP
Lacon London
84 Theobalds Road
London WC1X 8NL (GB)**

(56) References cited:
**US-A1- 2003 206 603      US-A1- 2005 135 521
US-A1- 2006 039 506      US-A1- 2010 067 622**

- **GIUGNO L ET AL: "Efficient compensation of I/Q phase imbalance for digital receivers", COMMUNICATIONS, 2005. ICC 2005. 2005 IEEE INTERNATIONAL CONFERENCE ON SEOUL, KOREA 16-20 MAY 2005, PISCATAWAY, NJ, USA,IEEE, vol. 4, 16 May 2005 (2005-05-16), pages 2462-2466, XP010825616, DOI: 10.1109/ICC.2005.1494778 ISBN: 978-0-7803-8938-0**

EP 2 779 563 B1

**Description**

## BACKGROUND

In radio receivers, IQ errors (or IQ imbalance) can cause the radio to exhibit a poor signal-to-noise ratio or exhibit errors. As modulation schemes become more complex utilizing larger numbers of constellation symbols, the radios become less tolerant of IQ errors. Hence, conventional techniques that set the radio's operational parameters at the time of manufacture or at the time of power up are inadequate to achieve adequate signal-to-noise ratio (SNR) in more complex modulation schemes.

US 2006/039506 relates to a receiver for estimation or compensation of phase imbalance or gain imbalance utilizing a QPSK modulation and a modulation scheme based on a complex scrambling code. The phase imbalance or gain imbalance is estimated or compensated before synchronisation. Thus, the phase imbalance and gain imbalance will not be able to introduce losses in the further phases of the connection.

US 2005/135521 describes a method and apparatus for compensating I/Q imbalance in receivers. The method includes determining a difference between energies of two quadratures, correcting an amplitude imbalance using the difference between the energies of two quadratures, determining a cross-correlation between the two quadratures, and correcting a phase imbalance using the cross-correlation between the two quadratures.

US 2010/067622 describes a controller and a circuit that work together to enable a selective and dynamic adjustment to correct phase and gain imbalances in quadrature signal paths of a receiver. Under select conditions, it has been determined that statistical estimates of gain and phase imbalance can be applied to adjust signals in the quadrature signal paths of a receiver. The controller validates the select conditions before updating the estimate of the gain imbalance and the estimate of the phase imbalance. The controller directs a compensator under select operating conditions such that validated dynamic estimates of the gain and phase imbalance or calibration data is applied to the quadrature signal paths. The controller disables the compensator and enables an estimator and a calculator when estimates are unavailable for the present operating conditions.

US 2003/206603 presents systems and methods for passively calibrating and correcting for I/Q mismatch in a quadrature receiver without the necessity of modifying the analog portion of the receiver by adding calibration signals or correction circuitry. The passive I/Q mismatch calibration system proceeds using normally received incoming transmitted data signals to obtain statistical information on which to base I/Q mismatch compensation factors. The I/Q mismatch compensation factors can be used to adjust the magnitude and phase response in the time domain or the frequency domain, the analog or the digital portion of the receiver. Depending on the embodiment of US 2003/206603, the passive I/Q mismatch calibration system can calibrate frequency dependent gain or magnitude imbalance, frequency independent magnitude imbalance, frequency dependent phase imbalance, and frequency independent phase imbalance or combinations or these.

Giugno, L. et al. "Efficient compensation of I/Q imbalance for digital receivers", Communications, IEEE, Vol. 4, pages 2462-2466 presents a novel Data Aided (DA) joint estimator of the carrier phase offset and the I/Q phase imbalance derived following the Maximum Likelihood (ML) criterion.

## SUMMARY

The invention is set out in the claims.

## BRIEF DESCRIPTION OF THE DRAWINGS

Example embodiments of the present disclosure will be described below with reference to the included drawings such that like reference numerals refer to like elements and in which:

**FIG. 1** is block diagram of an example radio transceiver consistent with certain embodiments.

**FIG. 2** is block diagram of an example of a portion of the radio receiver of radio 104.

**FIG. 3,** which is made up of **FIG. 3a** and **FIG. 3b** depicts phase and gain distortion in the I/Q space.

**FIG. 4** is a depiction of gain and phase error in I/Q space from which symmetry calculations can be derived.

**FIG. 5** is an example block diagram depicting a mixer model consistent with the present discussion.

**FIG. 6** is an example block diagram depicting an I/Q correction matrix.

**FIG. 7** is block diagram of a mixer correction implemented in a radio device in a manner consistent with the present discussion.

**FIG 8** is a flow chart of an example process consistent with the present teachings.

## DETAILED DESCRIPTION

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The invention is not to be considered as limited to the scope of the embodiments described herein.

The terms "a" or "an", as used herein, are defined as one or more than one. The term "plurality", as used herein, is defined as two or more than two. The term "another", as used herein, is defined as at least a second or more. The terms "including" and/or "having", as used herein, are defined as comprising (i.e., open language). The term "coupled", as used herein, is defined as connected, although not necessarily directly, and not necessarily mechanically. The term "program" or "computer program" or "application" or similar terms, as used herein, is defined as a sequence of instructions designed for execution on a computer system. A "program", or "computer program", may include a subroutine, a function, a procedure, an object method, an object implementation, in an executable application, an applet, a servlet, a source code, an object code, a shared library / dynamic load library and/or other sequence of instructions designed for execution on a computer system. The term "processor", "controller", "CPU", "Computer" and the like as used herein encompasses both hard programmed, special purpose, general purpose and programmable devices and may encompass a plurality of such devices or a single device in either a distributed or centralized configuration without limitation.

Reference throughout this document to "one embodiment", "certain embodiments", "an embodiment", "an example", "an implementation", "an example" or similar terms means that a particular feature, structure, or characteristic described in connection with the embodiment, example or implementation is included in at least one embodiment, example or implementation of the present invention. Thus, the appearances of such phrases or in various places throughout this specification are not necessarily all referring to the same embodiment, example or implementation. Furthermore, the particular features, structures, or characteristics may be combined in any suitable manner in one or more embodiments, examples or implementations without limitation.

The term "or" as used herein is to be interpreted as an inclusive or meaning any one or any combination. Therefore, "A, B or C" means "any of the following: A; B; C; A and B; A and C; B and C; A, B and C". An exception to this definition will occur only when a combination of elements, functions, steps or acts are in some way inherently mutually exclusive.

This discussion addresses the problem of IQ imbalance (or errors) within radios. These IQ errors in a transceiver effectively contribute to the overall error vector magnitude (EVM) and SNR of a transceiver. IQ errors are usually primarily due to mismatches in the I and Q path in a transceiver and are generally a function of temperature, gain, and frequency bands/channels.

As noted above IQ errors (or IQ imbalance) in radio receivers can cause the radio to exhibit a poor signal-to-noise ratio or exhibit errors. As modulation schemes become more complex utilizing larger numbers of constellation symbols, the radios become less tolerant of IQ errors. Hence, conventional techniques that set the radio's operational parameters at the time of manufacture or at the time of power up are inadequate to achieve adequate signal-to-noise ratio (SNR). This problem is most evident when a particular modulation scheme dictates need for a SNR of greater than about 29 dB.

This problem is addressed in accord with the present teachings by changing the phase and gain error in the field in real time using communication signals rather than artificial test signals. The subset is measured for the level of radio performance in real time. In this case, the radio's performance can be a measure of the symmetry of the IQ plot. It should be noted that ideally all IQ plots are symmetrical about the I and Q - axis. The level of radio performance can thus be measured in of IQ symmetry.

Therefore, in accordance with certain aspects of the present disclosure, there is provided a method in which a radio receiver having first and second mixers that mix a received communication signal to produce quadrature I and Q signals, measuring an output value of the I and Q signals, a programmed processor is configured to carry out: evaluating symmetry in the I and Q signals by calculating a symmetry test value; iteratively testing gain and phase shift correction values by applying the gain and phase shift correction values to the I and Q signals to identify a pair of gain and phase shift correction values of the gain and phase shift correction values that produces an improved symmetry test value; selecting the pair of gain and phase shift correction values; and applying the pair of gain and phase shift correction values to the I and Q signals from the first and second mixers to generate a reduced amplitude and phase error in the output I and Q signals.

In certain implementations, the symmetry test value is equal to or proportional to:

$$Symmetry\_test\_value = \frac{abs(\langle II \rangle - \langle QQ \rangle) + abs(\langle IQ \rangle)}{(\langle II \rangle + \langle QQ \rangle)},$$

where <> means average values. In certain implementations, the symmetry test value is equal to or proportional to: $Symmetry\_test\_value = <I>^2 - <Q>^2$, where <> means average values. In certain implementations, the symmetry test value is equal to or proportional to: $Symmetry\_phase = <I*Q>$ where <> means average values. In certain implementations, the gain and phase shift values are stored state variables that are tested to identify a pair of selected gain and phase shift correction values of the gain and phase shift correction values. In certain implementations, the gain and phase shift values are applied to signals from the first and second mixers by processing with a matrix multiplication with the selected pair of gain and phase shift correction values.

In another method, there is provided a radio receiver having first and second mixers that mix a received communication signal to produce quadrature I and Q signals, measuring an output value of the I and Q signals. A programmed processor is configured to carry out evaluating symmetry in the I and Q signals by calculating a symmetry test value, where the symmetry test value is equal to or proportional to:

$$Symmetry\_test\_value = \frac{abs(\langle II \rangle - \langle QQ \rangle) + abs(\langle IQ \rangle)}{(\langle II \rangle + \langle QQ \rangle)},$$

where <> means average values; iteratively testing gain and phase shift correction values by applying the gain and phase shift values to the I and Q signals to identify a pair of gain and phase shift correction values of the gain and phase shift correction values that produces an improved symmetry test value; selecting the pair of gain and phase shift correction values, where the gain and phase shift values are stored state variables that are tested to identify the selected pair of gain and phase shift correction values; and applying the selected pair of gain and phase shift correction values to the I and Q signals from the first and second mixers.

In certain implementations, the gain and phase shift correction values are applied to signals from the first and second mixers by processing with a matrix multiplication with the gain and phase shift errors (pair of selected gain and phase shift correction values).

An example radio device has a radio receiver having first and second mixers that mix a received communication signal to produce quadrature I and Q signals, measuring an output value of the I and Q signals. A programmed processor is programmed to: evaluate symmetry in the I and Q signals by calculating a symmetry test value; iteratively test gain and phase shift correction values by applying the gain and phase shift values to the I and Q signals to identify a pair of gain and phase shift correction values of the gain and phase shift correction values that produces an improved symmetry test value; select the pair of gain and phase shift correction values; and apply the selected pair of gain and phase shift correction values to the I and Q signals from the first and second mixers to generate a reduced amplitude and phase error in the output value of the I and Q signals.

In certain implementations, the symmetry test value is equal to or proportional to:

$$Symmetry\_test\_value = \frac{abs(\langle II \rangle - \langle QQ \rangle) + abs(\langle IQ \rangle)}{(\langle II \rangle + \langle QQ \rangle)},$$

where <> means average values. In certain implementations, the symmetry test value is equal to or proportional to: $Symmetry\_test\_value = <I>^2 - <Q>^2$, where <> means average values. In certain implementations, the symmetry test value is equal to or proportional to: $Symmetry\_phase = <I*Q>$, where <> means average values. In certain implementations, the gain and phase shift values are stored state variables that are tested to identify the selected gain and phase shift correction values. In certain implementations, the gain and phase shift values are applied to signals from the first and second mixers by processing with a matrix multiplication with the identified and selected gain and phase shift errors. In certain implementations, the gain and phase shift values are stored state variables that are tested to identify selected gain and phase shift values. In certain implementations, the gain and phase shift values are applied to signals from the first and second mixers by processing with a matrix multiplication with the identified and selected gain and phase shift errors. In certain implementations, the gain and phase shift values are stored state variables that are tested to identify the selected gain and phase shift values. In certain implementations, the gain and phase shift values are applied to signals from the first and second mixers by processing with a matrix multiplication with the identified and selected gain and phase shift errors. In certain implementations, the gain and phase shift values are stored state variables that are tested to identify the selected gain and phase shift correction values. In certain implementations, the gain and phase shift values are applied to signals from the first and second mixers by processing with a matrix multiplication with the identified and selected gain and phase shift errors.

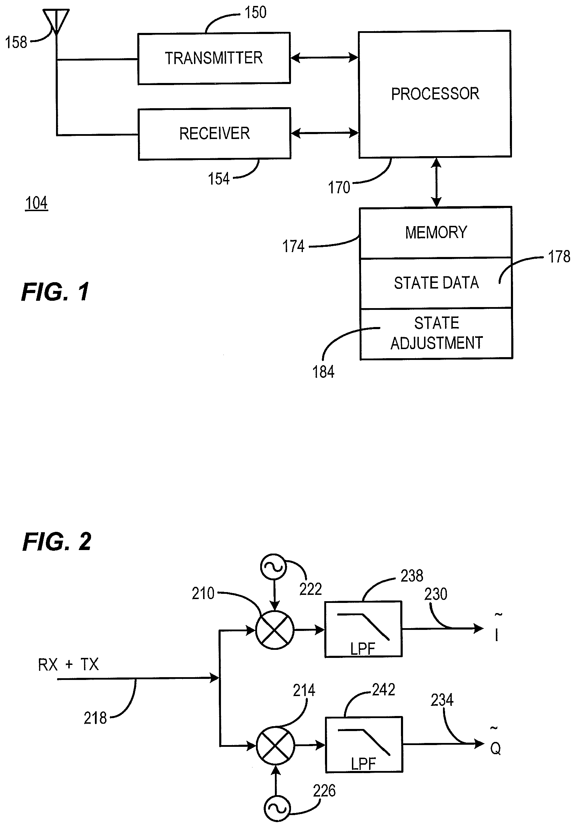

**FIG. 1** is an illustration of an example block diagram of a radio transceiver 104 example. This block diagram is simplified for clarity. In this example, radio transceiver 104 has a transmitter 150 and a receiver 154 that are operatively coupled to an antenna 158 for transmission and reception. Transmitter 150 and receiver 154 are controlled by one or more processors 170 that control operation of the radio and selection of the various state variables used to define operation of the various circuit elements making up transmitter 150 and receiver 154. Processor 170 utilizes memory 174 of any suitable type that stores state variable data 178 as well as various sets of instructions for control of the transceiver. One example set of instructions 184 implements functions that adjust the state variables used by the radio in the manner discussed herein in order to improve IQ symmetry.

With reference to **FIG. 2**, a block diagram of a portion of the receiver 154 is depicted. In the embodiment discussed herein, the radio receiver 154 has a pair of mixers 210 and 214 that produce outputs by mixing their input signal 218 with local oscillator signals 222 and 226 (which are 90 degrees out of phase) in order to produce quadrature I and Q output signals coming from the pair of mixers. These I and Q output signals are a product of mixing local oscillator signals with the input signal at 218 at mixers 210 and 214 to translate the I and Q signals down to baseband in a single conversion and are the signals that are decoded after filtering at low pass filters 238 and 242. At outputs 230 and 234 the output quadrature signals are designated $\tilde{I}$ and Q in order to indicate that this signal has magnitude and/or phase errors. While this discussion presumes a single conversion radio receiver, the present techniques are equally applicable to multiple conversion receivers.

In accord with certain implementations, the mixers 210 and 214 may have controllable parameters that can be adjusted directly or indirectly by a processor 170. Such controllable parameters can have an effect on the amount of errors in I and Q produced at the output of the mixers and hence at the output of the filters. Processor 170 operates based on instructions stored in a memory 174 that includes instructions 184 that estimate the I and Q errors and helps to minimize such errors. Hence, a method can be provided to estimate/measure the I and Q errors in the presence of a wanted signal during operation of the transceiver in the field. By taking this measurement, the IQ signal errors as measured by asymmetry of the IQ signals can be minimized using a closed loop approach.

In the example transceiver of **FIG. 2** it would be desirable for the $\tilde{I}$ signal 230 and the $\tilde{Q}$ signal 234 to be processed in the radio transceiver in order to carry out reception of a transmitted communication. Distortions created within the mixers and filters can cause the magnitude and phase of the $\tilde{I}$ and $\tilde{Q}$ signals to deviate from ideal thus reducing the SNR (signal to noise ratio). As noted above, one measure of this error often shows up as an error in IQ symmetry.

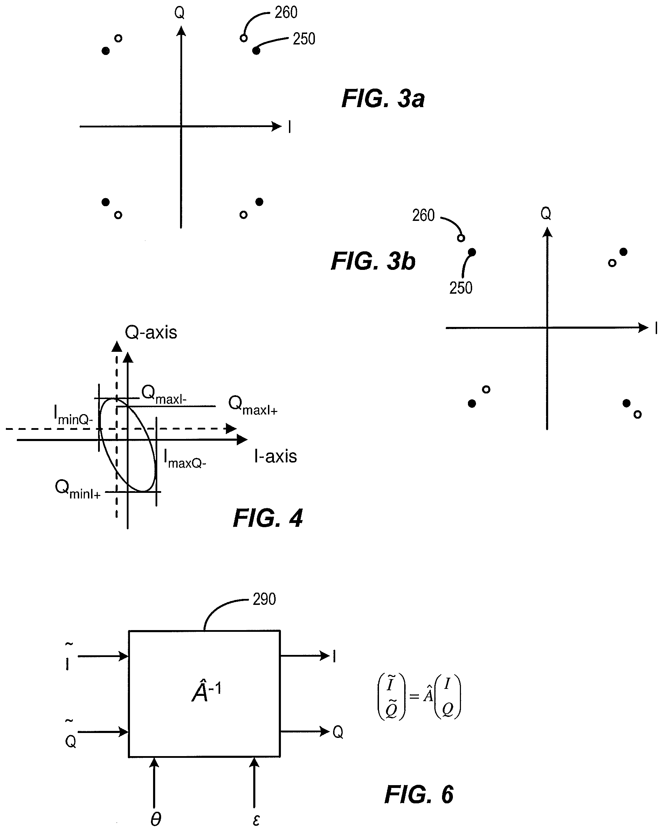

In an ideal receiver, the I and Q signals are symmetrical. This is illustrated in **FIG. 3a** and **Fig. 3b** by an ideal IQ plot for a four symbol system in which the solid dots such as 250 represent ideal locations of the four symbols in IQ space lying in a perfect circle. When there is gain error, as depicted in **FIG. 3a**, the magnitude of the symbols is shifted horizontally or vertically or both. In this case, this is represented by open dots such as 260 in which the gain in the Q direction is too large in magnitude and the gain in the I direction is too small in magnitude. In **FIG. 3b**, the phase error effects result in a shifting out of some symbols relative to the origin and shifting in of others. This causes the constellation to again be asymmetrical.

One method to define Symmetry is as follows, making reference to **FIG. 4**:

$$Q_a = \text{average}(Q); \% \text{ effectively the DC offset of the Q-data over a number of samples;}$$

$$I_a = \text{average}(I); \% \text{ effectively the DC offset of the I-data over a number of samples;}$$

$$Q_{maxI+} = \text{maxI+}(Q) - Q_a/2; \% \ ;$$

$$I_{maxQ+} = \text{maxQ+}(I) - I_a/2; \% \ ;$$

$$Q_{minI+} = \text{minI+}(Q) - Q_a/2; \% \ ;$$

$$I_{minQ+} = \text{minQ+}(I) - I_a/2; \% \ ;$$

$$Q_{maxI-} = \text{maxI-}(Q) - Q_a/2; \% \ ;$$

$$Q_{minI-} = minI-(Q)-Q_a/2; \% ;$$

$$Q_{minI-} = minI-(Q)-Q_a/2; \% ;$$

$$I_{minQ-} = minQ-(I)-I_a/2; \% ;$$

$$Norm = max(Q_{maxI+},Q_{maxI-})^2 + min(Q_{minI+},Q_{minI-})^2 + max(I_{maxQ+},I_{maxQ-})^2 +$$
$$min(I_{minQ+},I_{minQ-})^2;$$

% this is normalized maximum;

$$Symmetry\_test = (|_{max}(Q_{maxI-},Q_{maxI+})|-|min(Q_{minI-},Q_{minI+})|)^2 +$$
$$(|min(Q_{maxI-},Q_{maxI+})|-|max(Q_{minI-},Q_{minI+})|)^2 + (|max(I_{maxQ-},I_{maxQ+})|-|min(I_{minQ-},I_{minQ+})|)^2 + (|min(I_{maxQ-},I_{maxQ+})|-|max(I_{minQ-},I_{minQ+})|)^2 + (max(Q_{maxI-},Q_{maxI+})-max(I_{maxQ+},I_{maxQ-}))^2;$$

$$Symmetry\_test = 100*Symmetry\_test/Norm;$$

the units are in the percentage. Ideally Symmetry_test = 0% .

Generally speaking, the I and Q data will have an average value (i.e. the DC offset) and a spread. The standard deviation (or rms values) of the Q and I data should be equal if the data is symmetrical. This could also be used as a measure of symmetry; i.e.:

$$Symmetry\_gain = (\sigma_I)^2-(\sigma_Q)^2 = <II>-<QQ>$$

$$= <I>^2-<Q>^2. \qquad \textbf{EQUATION 1}$$

Where $(\sigma_I)^2-(\sigma_Q)^2$ is the difference in the average value of I and Q squared.

Furthermore, ideally the I and Q data should not be correlated. Therefore another measure of symmetry is given by:

$$Symmetry\_phase = <I*Q> . \qquad \textbf{EQUATION 2}$$

In each case, the symmetry measurement is fully optimized (assuming no other distortions) when symmetry_gain and symmetry_phase are equal to zero.

Therefore, a complete measure of symmetry (both gain and phase) is given by (expressed as a percentage):

$$Symmetry\_test = \frac{abs(\langle II \rangle - \langle QQ \rangle) + abs(\langle IQ \rangle)}{(\langle II \rangle + \langle QQ \rangle)/2} \times 100$$

and hence,

$$Symmetry\_test \propto \frac{abs(\langle II\rangle - \langle QQ\rangle) + abs(\langle IQ\rangle)}{(\langle II\rangle + \langle QQ\rangle)}$$ **EQUATION 3**

Where zero is again the optimum symmetry.

Hence, in accord with examples consistent with the present teachings, any of **EQUATIONS 1, 2** or **3** can be utilized as a test for symmetry which can be minimized by variation of state variables to achieve improvement in IQ error distortion, with **EQUATION 3** being the most comprehensive of the three tests.

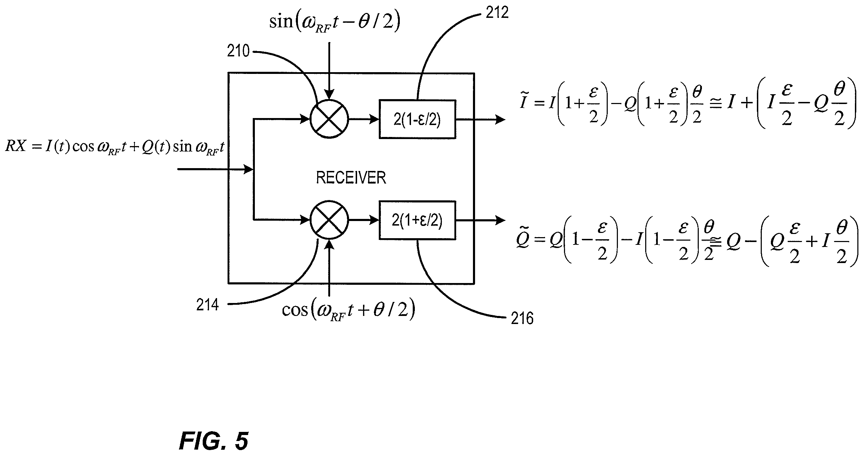

Referring now to **FIG. 5,** the IQ imbalance can be modeled as a gain error $\varepsilon$ and a phase error $\square$ that is induced by mismatches in the I and Q paths of the receiver. In this model, the mixers 210 and 214 are modeled by ideal mixers with gain stages 212 and 216 having gains $2(1-\varepsilon/2)$ and $2(1-\varepsilon/2)$ respectively. The phase shift is modeled in the oscillators as:

$$\sin(\omega_{RF}\, t - \theta/2)$$

and

$$\cos(\omega t + \theta/2).$$

The input signal RX is modeled as:

$$RX = I(t)\cos \omega_{RF} t + Q(t)\sin \omega_{RF} t$$

resulting in output signals:

$$\tilde{I} = I\left[1 + \tfrac{\varepsilon}{2}\right] - Q\left[1 + \tfrac{\varepsilon}{2}\right]\tfrac{\theta}{2} \cong I + \left[I\tfrac{\varepsilon}{2} - Q\tfrac{\theta}{2}\right];$$

and

$$\tilde{Q} = Q\left[1 - \tfrac{\varepsilon}{2}\right] - I\left[1 - \tfrac{\varepsilon}{2}\right]\tfrac{\theta}{2} \cong Q - \left[Q\tfrac{\varepsilon}{2} + I\tfrac{\theta}{2}\right].$$

Knowing this, and referring to **FIG. 6**, one can devise a signal processing arrangement 290 in which the error containing $\tilde{I}$ and $\tilde{Q}$ signals in the receiver can be corrected. At the output of the mixers (and possibly filters) the $\tilde{I}$ and $\tilde{Q}$ signals are processed by the processor 170 to implement a signal processor with transfer function in the form of a matrix multiplication $\hat{A}^{-1}$ which is derived from:

$$\begin{pmatrix} \tilde{I} \\ \tilde{Q} \end{pmatrix} = \hat{A}\begin{pmatrix} I \\ Q \end{pmatrix}.$$ **EQUATION 4**

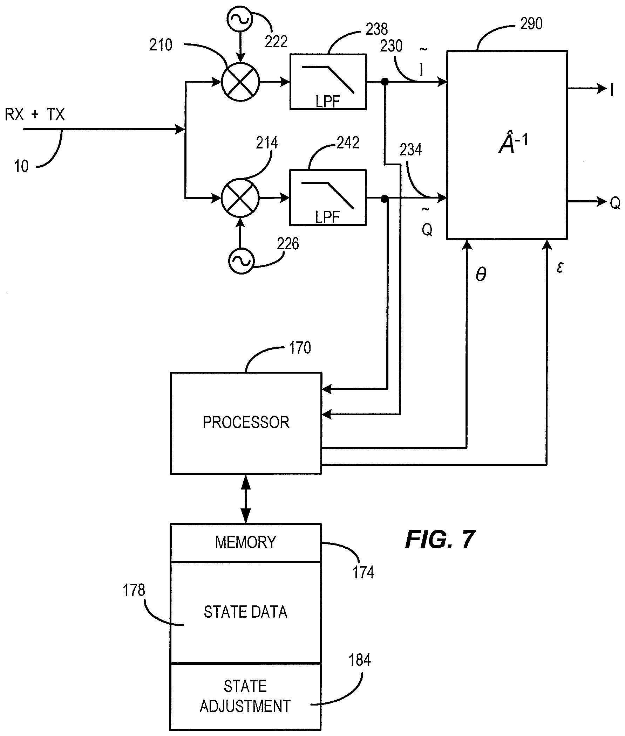

This can be implemented as shown in **FIG. 7** using one or more programmed processors 170 in which a collection of symbols is analyzed and the value of one of the symmetry test equations above is tested to ascertain which stored or derived set of state variables produces a lowest or an adequately low level of I/Q distortion by virtue of reducing or minimizing the asymmetry of the I/Q data. This set of state variables $\varepsilon$ and $\square$ are then established for use in processing the $\tilde{I}$ and $\tilde{Q}$ signals in processor 170 to implement a signal processor with transfer function in the form of a matrix multiplication $\hat{A}^{-1}$ so as to correct the $\tilde{I}$ and $\tilde{Q}$ signals to be closer to I and Q. As the values of state variables $\varepsilon$ and $\square$ are incremented by processor 170, the value of a symmetry_value is evaluated to determine a minimum value or a value that is adequately low. The same real time communication signals $\tilde{I}$ and $\tilde{Q}$ signals can be used repeatedly by processor 170 in doing this evaluation if desired, or different real time communication signals can be used for each iteration.

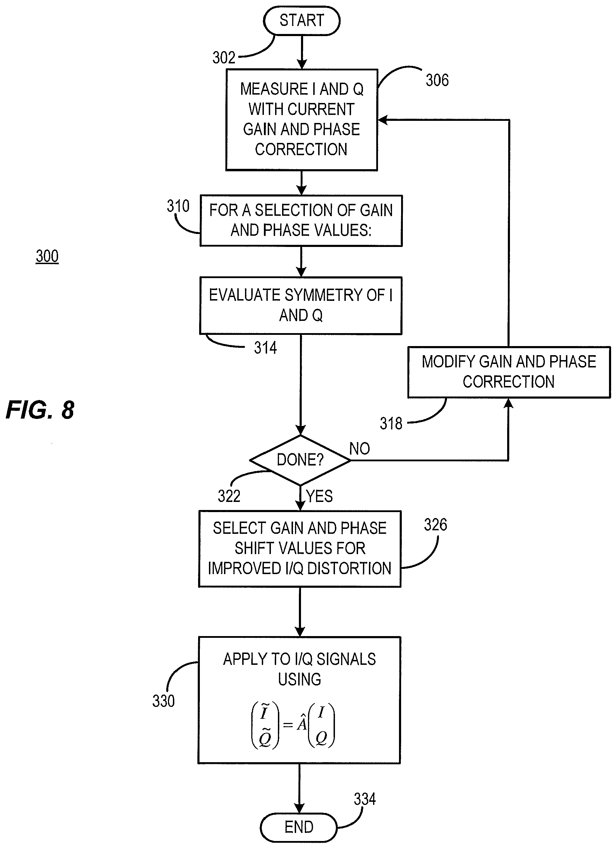

The example process just described can be expressed in an example flow chart of a process consistent with certain implementations shown as process 300 of **FIG. 8**. Starting at 302, the I and Q values are evaluated using the currently installed gain and phase shift parameters for the radio at 306. Then, for a selection of gain and phase values (e.g., all of the stored possible values, or a subset thereof surrounding the current values) at 310, a recursive process of evaluation of the symmetry of the I and Q data at 314 is carried out followed by modification of the gain and phase again at 318 until the selection of various gain and phase values is completed at 322. The same set of I and Q data can be used in each set of tests if desired when optimizing the symmetry.

Once the recursive test is completed, the gain and phase values are selected for improvement in IQ distortion at 326. Correction is then applied at 330 using the signal processing of 290 as discussed previously. The process ends at 334, but can be repeated at a later time or at periodic intervals to assure that IQ error remains acceptable.

The order in which the operations represented in **FIG. 8** may vary in any operative order. Thus, while the blocks comprising the methods are shown as occurring in a particular order, it will be appreciated by those skilled in the art that many of the blocks may be interchangeable and can occur in different orders than that shown without materially affecting the end results of the methods.

The implementations of the present disclosure described above are intended to be examples only. Those of skill in the art can effect alterations, modifications and variations to the particular example embodiments herein without departing from the intended scope of the present disclosure. Moreover, selected features from one or more of the above-described example embodiments can be combined to create alternative example embodiments not explicitly described herein.

It will be appreciated that any module or component disclosed herein that executes instructions may include or otherwise have access to non-transitory and tangible computer readable media such as storage media, computer storage media, or data storage devices (removable or non-removable) such as, for example, magnetic disks, optical disks, or tape data storage, where the term "non-transitory" is intended only to exclude propagating waves and signals and does not exclude volatile memory or memory that can be rewritten. Computer storage media may include volatile and non-volatile, removable and non-removable media implemented in any method or technology for storage of information, such as computer readable instructions, data structures, program modules, or other data. Examples of computer storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by an application, module, or both. Any such computer storage media may be part of the server, any component of or related to the network, backend, etc., or accessible or connectable thereto. Any application or module herein described may be implemented using computer readable/executable instructions that may be stored or otherwise held by such computer readable media.

The present disclosure may be embodied in other specific forms without departing from its essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

**Claims**

1. A method, comprising:

  in a radio receiver (154) having first and second mixers (210, 214) that mix a received communication signal to produce quadrature I and Q signals, measuring an output value of the I and Q signals;
  at a programmed processor (170):

    evaluating symmetry in the I and Q signals by calculating a symmetry test value;
    iteratively testing gain and phase shift correction values by applying the gain and phase shift values to the I and Q signals to identify a gain and phase shift value that produces an improved symmetry test value;
    selecting a gain and phase shift value for reduced amplitude and phase error in the output I and Q signals; and
    applying the selected gain and phase shift value to the I and Q signals from the first and second mixers (210, 214),

  where the symmetry test value is equal to or proportional to:

$$Symmetry\_test\_value = \frac{abs(\langle II \rangle - \langle QQ \rangle) + abs(\langle IQ \rangle)}{(\langle II \rangle + \langle QQ \rangle)}$$

where <> means average values.

2. The method according to claim 1, where the gain and phase shift values are stored state variables that are tested to identify the selected gain and phase shift values.

3. The method according to claim 1 or 2, where the gain and phase shift values are applied to signals from the first and second mixers (210, 214) by processing with a matrix multiplication that multiplies the signals from the first and second mixers (210, 214) with the gain and phase shift errors.

4. A radio device, comprising:

a radio receiver (154) having first and second mixers (210, 214) that are adapted to mix a received communication signal to produce quadrature I and Q signals;
means for measuring (238, 242) an output value of the I and Q signals;
a programmed processor (170) that is programmed to:

evaluate symmetry in the I and Q signals by calculating a symmetry test value;
iteratively test gain and phase shift correction values by applying the gain and phase shift values to the I and Q signals to identify a gain and phase shift value that produces an improved symmetry test value;
select a gain and phase shift value for reduced amplitude and phase error in the output I and Q signals; and
apply the selected gain and phase shift value to the I and Q signals from the first and second mixers (210, 214),

where the symmetry test value is equal to or proportional to:

$$Symmetry\_test\_value = \frac{abs(\langle II \rangle - \langle QQ \rangle) + abs(\langle IQ \rangle)}{(\langle II \rangle + \langle QQ \rangle)}$$

where <> means average values.

5. The radio device according to claim , where the gain and phase shift values are stored state variables that are tested to identify the selected gain and phase shift values.

6. The radio device according to claim 4 or 5, where the gain and phase shift values are applied to signals from the first and second mixers (210, 214) by processing with a matrix multiplication that multiplies the signals from the first and second mixers (210, 214) with the gain and phase shift errors.

**Patentansprüche**

1. Ein Verfahren, das aufweist:

in einem Funkempfänger (154) mit ersten und zweiten Mischern (210, 214), die ein empfangenes Kommunikationssignal mischen, um Quadratur-I- und Q-Signale zu erzeugen, Messen eines Ausgangswerts der I- und Q-Signale;
in einem programmierten Prozessor (170):

Evaluieren einer Symmetrie in den I- und Q-Signalen durch Berechnen eines Symmetrietestwerts;
iteratives Testen von Verstärkungs- und Phasenverschiebungskorrekturwerten durch Anwenden der Verstärkungs- und Phasenverschiebungswerte auf die I- und Q-Signale, um einen Verstärkungs- und Phasenverschiebungswert zu identifizieren, der einen verbesserten Symmetrietestwert erzeugt;
Auswählen eines Verstärkungs- und Phasenverschiebungswerts für einen reduzierten Amplitude- und Phasenfehler in den Ausgangs-I- und Q-Signalen; und
Anwenden des ausgewählten Verstärkungs- und Phasenverschiebungswerts auf die I- und Q-Signale von den ersten und zweiten Mischern (210, 214),
wobei der Symmetrietestwert gleich oder proportional ist zu:

$$Symmetry\_test\_value = \frac{abs(\langle II \rangle - \langle QQ \rangle) + abs(\langle IQ \rangle)}{(\langle II \rangle + \langle QQ \rangle)}$$

wobei <> Durchschnittswerte bedeutet.

2. Das Verfahren gemäß Anspruch 1, wobei die Verstärkungs- und Phasenverschiebungswerte gespeicherte Zustandsvariablen sind, die getestet werden, um die ausgewählten Verstärkungs- und Phasenverschiebungswerte zu identifizieren.

3. Das Verfahren gemäß Anspruch 1 oder 2, wobei die Verstärkungs- und Phasenverschiebungswerte auf Signale von den ersten und zweiten Mischern (210, 214) durch Verarbeitung mit einer Matrixmultiplikation angewendet werden, die die Signale von den ersten und zweiten Mischern (210, 214) mit den Verstärkungs- und Phasenverschiebungsfehlern multipliziert.

4. Eine Funkvorrichtung, die aufweist:

einen Funkempfänger (154) mit ersten und zweiten Mischern (210, 214), die ausgebildet sind zum Mischen eines empfangenen Kommunikationssignals, um Quadratur-I- und Q-Signale zu erzeugen;
Mittel zum Messen (238, 242) eines Ausgangswerts der I- und Q-Signale;
einen programmierten Prozessor (170), der programmiert ist zum:

Evaluieren einer Symmetrie in den I- und Q-Signalen durch Berechnen eines Symmetrietestwerts;
iteratives Testen von Verstärkungs- und Phasenverschiebungskorrekturwerten durch Anwenden der Verstärkungs- und Phasenverschiebungswerte auf die I- und Q-Signale, um einen Verstärkungs- und Phasenverschiebungswert zu identifizieren, der einen verbesserten Symmetrietestwert erzeugt;
Auswählen eines Verstärkungs- und Phasenverschiebungswerts für einen reduzierten Amplitude- und Phasenfehler in den Ausgangs-I- und Q-Signalen; und
Anwenden des ausgewählten Verstärkungs- und Phasenverschiebungswerts auf die I- und Q-Signale von den ersten und zweiten Mischern (210, 214),
wobei der Symmetrietestwert gleich oder proportional ist zu:

$$Symmetry\_test\_value = \frac{abs(\langle II \rangle - \langle QQ \rangle) + abs(\langle IQ \rangle)}{(\langle II \rangle + \langle QQ \rangle)}$$

wobei <> Durchschnittswerte bedeutet.

5. Die Funkvorrichtung gemäß Anspruch, wobei die Verstärkungs- und Phasenverschiebungswerte gespeicherte Zustandsvariablen sind, die getestet werden, um die ausgewählten Verstärkungs- und Phasenverschiebungswerte zu identifizieren.

6. Die Funkvorrichtung gemäß Anspruch 4 oder 5, wobei die Verstärkungs- und Phasenverschiebungswerte auf Signale von den ersten und zweiten Mischern (210, 214) durch Verarbeitung mit einer Matrixmultiplikation angewendet werden, die die Signale von den ersten und zweiten Mischern (210, 214) mit den Verstärkungs- und Phasenverschiebungsfehlern multipliziert.

**Revendications**

1. Procédé, comprenant :

dans un récepteur radio (154) ayant des premier et second mélangeurs (210, 214) qui mélangent un signal de communication reçu pour produire des signaux I et Q en quadrature, la mesure d'une valeur de sortie des signaux I et Q ;
au niveau d'un processeur programmé (170) :

l'évaluation d'une symétrie dans les signaux I et Q en calculant une valeur de test de symétrie ;

le test itératif de valeurs de correction de gain et de déphasage en appliquant les valeurs de gain et de déphasage aux signaux I et Q pour identifier une valeur de gain et de déphasage qui produit une valeur de test de symétrie améliorée ;

la sélection d'une valeur de gain et de déphasage pour une erreur d'amplitude et de phase réduite dans les signaux I et Q de sortie ; et

l'application de la valeur de gain et de déphasage sélectionnée aux signaux I et Q en provenance des premier et second mélangeurs (210, 214),

où la valeur de test de symétrie est égale ou proportionnelle à :

$$Symmetry\_test\_value = \frac{abs(\langle II \rangle - \langle QQ \rangle) + abs(\langle IQ \rangle)}{(\langle II \rangle + \langle QQ \rangle)}$$

où <> signifie des valeurs moyennes.

2. Procédé selon la revendication 1, dans lequel les valeurs de gain et de déphasage sont des variables d'état stockées qui sont testées pour identifier des valeurs de gain et de déphasage sélectionnées.

3. Procédé selon la revendication 1 ou 2, dans lequel les valeurs de gain et de déphasage sont appliquées à des signaux en provenance des premier et second mélangeurs (210, 214) par traitement avec une multiplication matricielle qui multiplie les signaux en provenance des premier et second mélangeurs (210, 214) avec les erreurs de gain et de déphasage.

4. Dispositif radio, comprenant :

un récepteur radio (154) ayant des premier et second mélangeurs (210, 214) qui sont adaptés pour mélanger un signal de communication reçu pour produire des signaux I et Q en quadrature ;

des moyens pour mesurer (238, 242) une valeur de sortie des signaux I et Q ;

un processeur programmé (170) qui est programmé pour :

évaluer une symétrie dans les signaux I et Q en calculant une valeur de test de symétrie ;

tester itérativement des valeurs de correction de gain et de déphasage en appliquant les valeurs de gain et de déphasage aux signaux I et Q pour identifier une valeur de gain et de déphasage qui produit une valeur de test de symétrie améliorée ;

sélectionner une valeur de gain et de déphasage pour une erreur d'amplitude et de phase réduite dans les signaux I et Q de sortie ; et

appliquer la valeur de gain et de déphasage sélectionnée aux signaux I et Q en provenance des premier et second mélangeurs (210, 214),

où la valeur de test de symétrie est égale ou proportionnelle à :

$$Symmetry\_test\_value = \frac{abs(\langle II \rangle - \langle QQ \rangle) + abs(\langle IQ \rangle)}{(\langle II \rangle + \langle QQ \rangle)}$$

où <> signifie des valeurs moyennes.

5. Dispositif radio selon la revendication , dans lequel les valeurs de gain et de déphasage sont des variables d'état stockées qui sont testées pour identifier des valeurs de gain et de déphasage sélectionnées.

6. Dispositif radio selon la revendication 4 ou 5, dans lequel les valeurs de gain et de déphasage sont appliquées à des signaux en provenance des premier et second mélangeurs (210, 214) par traitement avec une multiplication matricielle qui multiplie les signaux en provenance des premier et second mélangeurs (210, 214) avec les erreurs de gain et de déphasage.

**FIG. 1**

**FIG. 2**

Q

260
250

FIG. 3a

I

FIG. 3b

260
250

Q

I

Q-axis

$Q_{maxI-}$

$I_{minQ-}$ $Q_{maxI+}$

I-axis

$I_{maxQ-}$

$Q_{minI+}$

FIG. 4

290

$\tilde{I}$

$\tilde{Q}$

$\hat{A}^{-1}$

I

Q

$$\begin{pmatrix} \tilde{I} \\ \tilde{Q} \end{pmatrix} = \hat{A} \begin{pmatrix} I \\ Q \end{pmatrix}$$

FIG. 6

$\theta$ $\varepsilon$

$$\sin\left(\omega_{RF}t - \theta/2\right)$$

210

212

$$RX = I(t)\cos\omega_{RF}t + Q(t)\sin\omega_{RF}t$$

| | 2(1-ε/2) |

RECEIVER

| | 2(1+ε/2) |

214

$$\cos\left(\omega_{RF}t + \theta/2\right)$$

216

$$\tilde{I} = I\left(1 + \frac{\varepsilon}{2}\right) - Q\left(1 + \frac{\varepsilon}{2}\right)\frac{\theta}{2} \cong I + \left(I\frac{\varepsilon}{2} - Q\frac{\theta}{2}\right)$$

$$\tilde{Q} = Q\left(1 - \frac{\varepsilon}{2}\right) - I\left(1 - \frac{\varepsilon}{2}\right)\frac{\theta}{2} \cong Q - \left(Q\frac{\varepsilon}{2} + I\frac{\theta}{2}\right)$$

**FIG. 5**

FIG. 7

**FIG. 8**

300

START
302

MEASURE I AND Q WITH CURRENT GAIN AND PHASE CORRECTION
306

FOR A SELECTION OF GAIN AND PHASE VALUES:
310

EVALUATE SYMMETRY OF I AND Q
314

MODIFY GAIN AND PHASE CORRECTION
318

DONE?
322

NO

YES

SELECT GAIN AND PHASE SHIFT VALUES FOR IMPROVED I/Q DISTORTION
326

APPLY TO I/Q SIGNALS USING

$$\begin{pmatrix} \tilde{I} \\ \tilde{Q} \end{pmatrix} = \hat{A} \begin{pmatrix} I \\ Q \end{pmatrix}$$

330

END
334

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006039506 A
- US 2005135521 A
- US 2010067622 A
- US 2003206603 A

**Non-patent literature cited in the description**

- Efficient compensation of I/Q imbalance for digital receivers. **GIUGNO, L. et al.** Communications. IEEE, vol. 4, 2462-2466